# EUROPEAN PATENT SPECIFICATION

(11) **EP 4 009 004 B1**
(45) Date of publication and mention of the grant of the patent: **22.10.2025**
(21) Application number: 20211153.0
(22) Date of filing: 02.12.2020
(51) Int. Cl.: G01D 5/20

(54) **EDDY CURRENT SENSOR DEVICE FOR MEASURING A LINEAR DISPLACEMENT**
WIRBELSTROM-SENSOR-VORRICHTUNG ZUR MESSUNG EINER LINEAREN VERSCHIEBUNG
DISPOSITIF DE CAPTEUR À COURANTS DE FOUCAULT POUR MESURER UN DÉPLACEMENT LINÉAIRE

(43) Date of publication of application: 08.06.2022
(73) Proprietor: TE Connectivity Sensors Germany GmbH, 44227 Dortmund (DE)
(72) Inventor: MEISENBERG, Armin, 44227 Dortmund (DE); PIEPER, Reinhold, 44227 Dortmund (DE); BARTOS, Axel, 44227 Dortmund (DE)
(74) Representative: Grünecker Patent- und Rechtsanwälte PartG mbB

(56) References cited:
- EP-A1- 3 495 781
- EP-A1- 3 627 113
- EP-A1- 3 702 738
- EP-A2- 0 743 508

## Description

The invention relates to an Eddy current sensor device for measuring a linear displacement of a boundary of a conductive element, the use of such a sensor for a shock absorber, and a corresponding method.

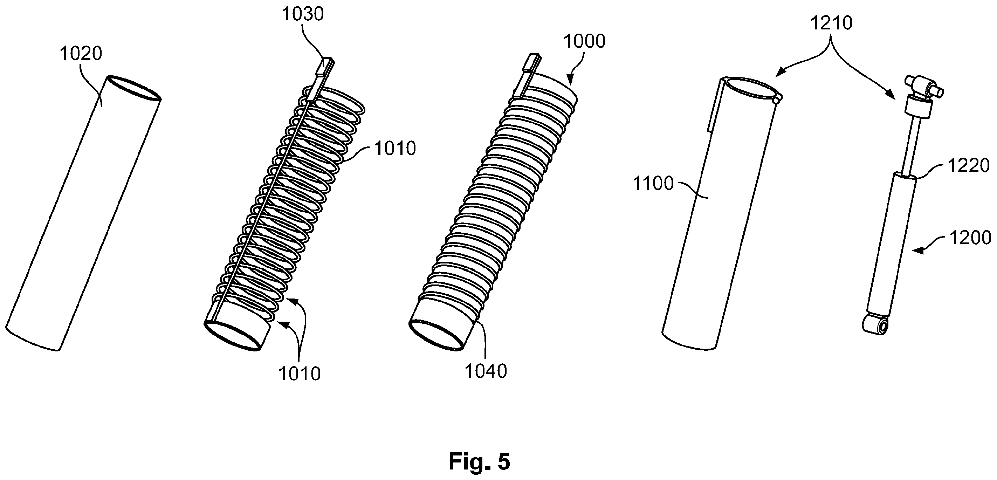

Fig. 5 shows a linear sensor device 1000 for a shock absorber 1200. In particular, such sensor devices enable detecting the linear position and movement of the shock absorber. For example, the sensor device 1000 is a linear variable differential transformer (LVDT) (also called Linear Variable Displacement Transformer, Linear Variable Displacement Transducer), or simply (DT) (Differential Transformer). A LVDT is a type of electrical transformer used for measuring linear displacement (position).

A LVDT sensor 1000 comprises a grooved inner plastic tube 1020 for accurate positioning of the transformer windings. Further, the sensor comprises three coils 1010, namely one primary winding and two secondary windings; the secondary windings are partly wired over the primary winding. The three coils 1010 consist of 20 to 40 turns each. The transformer winding and embedded electronics 1030 with integrated temperature sensor and electrical connector are mounted on to the supporting tube 1040 and over molded by a dust tube 1100, which has an interface to a shock absorbers piston rod top plate 1210.

In particular, the transformer coil and electronics are integrated into a shock absorber plastic dust tube 1100, utilizing the shock absorber 1200 as a core, which is connected to the suspension axle. Thus, the linear position of a boundary 1220, i.e. the boundary between the piston and a cylinder, of the shock absorber 1200 can be determined.

EP3702738 relates to an accurate position sensor that operates over a long range is provided. The position sensor can include a first sensor coil having a first number of periods over a range of motion of a target; and a second sensor coil having a second number of periods over the range, wherein the first number of periods is different from the second number of periods, and wherein the first sensor coil and the second sensor coil are arranged with respect to one another such that the target engages both of them simultaneously.

A disadvantage of the prior art sensor devices is that large tubes with wire coils are needed. Further, analogue signals have to be handled by the electronics. Additionally, an additional printed circuit board (PCB) for an evaluation circuit is need. Further, the assembly effort of all these parts is high. Further, the coil winding process is expensive.

The object of the invention is to provide a sensor that can be easily integrated in existing shock absorbers. A further object is a sensor that is robust to lateral displacement due to an air gap between sensing plane and the moving element, e.g. the shock absorber core. A further object is a sensor that reduces assembling efforts, in particular by reducing the number of parts to be assembled, and the manufacturing process to manufacture the structure of the sensing elements. A further object is providing a simple signal evaluation. A further object is providing a lightweight sensor.

This object is solved by the independent claim. Advantageous embodiments are solved by the dependent claims.

In more detail, as used herein an Eddy current sensor device is a sensor that uses the principle of Eddy current formation to sense displacement. Eddy currents are formed when a moving or changing magnetic field intersects a conductor or vice versa. In other words, a conductive element influences a magnetic field in a sensing plane, the Eddy current sensor being arranged in the sensing plane.

The fast changing magnetic field created by the AC-powered primary coil causes such currents within the conductor. In other words, when displacing the conductive element, the factor of the conductive element that covers the Eddy current sensor changes, thereby the sensed value changes. Thus, the boundary of the conductive element is determined.

Eddy currents cause a compensation of an external alternating field. They reduce the magnetic flux through the covered parts of an underlying secondary coil. Ferromagnetic materials concentrate the field and have an inverse effect on the flux in the secondary coil. Therefore both types of materials are able to be detected by eddy current sensors.

As used herein, tilt errors are errors caused by the displacement of the boundary of a moveable element perpendicular to the sensing plane. In other words, the distance between a boundary of the moving body and the sensing plane is not constant, i.e. causes a tilt error. This tilt error would cause no error in the case of the LVDT sensor, because the LVDT sensor encapsulates the moving element, i.e. the sensor and the moving body are symmetric in cylinder geometry. For an Eddy current sensor, this problem can be overcome by having an odd number of turns.

The solution according to the invention can further be improved by the following further developments and advantageous aspects, which are independent of each other and can be combined arbitrarily, as desired. The sender member can comprise a coil in order to generate the magnetic field. In order to save space, the coil can be planar. In particular, the coil can be a spiral coil.

As used herein, a sense coil is an electromagnetic coil, i.e. an electrical conductor such as a wire that is shaped. In other words, a sense coil is a conductor with a plurality of turns. As used herein, a turn is a loop of the conductor or a winding of the sense coil.

As used herein, arranging turns side by side forms a planar coil. In other words, the turns arranged side by sided are electrically connected. At the crossing of the wire of two abutting turns, the conductor can be arranged on two levels. The levels can, for example, be separated by insulating layers, or the conductors can be arranged on a front and a back side of a PCB. Such a configuration enables that in each turn is induced a voltage by the sender member. In more detail, the sum of the voltages is the sensed signal. By disturbing the magnetic field generated by the sender member, the position can be determined by the measured voltage amount. Such a planar coil can be particularly easy fabricated, for example as a PCB.

Advantageously, abutting turns of a sense coil are wound in opposite directions. Such a configuration enables that the net voltage of the sense coil is zero. Consequently, the measuring range can be increased.

As used herein, the linear axis is the axis to measure the linear displacement of the boundary of the conductive element. For example, in the case of a cylindrical symmetric element, such as a shock absorber, the moving direction of the element is the linear axis.

As used herein, the sensing plane is a plane wherein the sense coil is arranged. The sensing plane is advantageously flat. Alternatively, this plane may be defined in cylinder coordinates and may follow a surface of a cylinder. Such a configuration may save space in a configurations where the linear displacement of a conductive element that enters a tube or a sleeve has to be determined, for example a shock absorber part entering a dust tube. In other words, the sensing plane can form only partly a shell surface, e.g. a cylinder jacket.

As used herein, measurement range is the range of measured values for the Eddy current sensor in which the errors of the linear displacement measurement do not exceeded a given limit. A lower and an upper measuring range limit delimit the measurement range.

As used herein, increasing the measuring accuracy means that the edge sense coils provide additional information relating to the linear displacement of the boundary of the conductive element. As used herein, a diameter of a turn is a straight-line segment that passes through the center of the turn and whose endpoints lie on the turn. In other words, dimensions of end turns of the edge sense coils are shorter in length along the linear axis than dimensions of end turns of the central sense coils. Consequently, the periodic signal derived based on the edge sense coils is different to the periodic signal received based on the central sense coils. Such a configuration allows to improve the accuracy at the limits of the measurement range. In particular, such a configuration allows to increase the resolution by using the principles of a Vernier scale, which is also known as a Nonius, by using interpolation.

As used herein, end turns of a sense coil are the turns arranged at the limits of the measurement range. In other words, at the limits of the moving range of the conductive element.

Having an odd number of turns for the edge sense coils and the central sense coils leads to a reduced information close to the limits of the measurement range. Reducing the dimension of the end turns of edge sense coils increases the linear displacement information of the conducting element, i.e. adds an additional phase information. These additional phase information increases the measurement accuracy especially at the limits of the measurement range.

Advantageously, the number of turns of at least one of the edge sense coils is greater than the number of turns of at least one of the central sense coils. Such a configuration increasing the accuracy of the eddy current sensor. In particular, the accuracy is increased as well at the limits of the measurement range as well in the central part of the measurement range.

Even more advantageously, the turns of edge sense coils are equally shaped and the turns of the central sense coils are equally shaped. Such a configuration allows to measure displacement with a constant error contribution of the Eddy current sensor.

Even more advantageously, a diameter of turns of the edge sense coils can be smaller than a diameter of turns of the central sense coils along the linear axis. Consequently, the periodic signal received derived based on the edge sense coils is different to the period signal received based on the central sense coils. Such a configuration allows to improve the accuracy over the complete measurement range and allows a compact configuration. In particular, such a configuration allows to increase the resolution by using the principles of a Vernier scale, which is also known as a Nonius, by using interpolation.

According to the invention, each sense coil of a pair of sense coils shapes an area, the both areas delimited by the pair of sense coils being only partly overlapping in the sensing plane. Such a configuration allows improving the resolution by analyzing a phase relation between the pair of sense coils.

As used herein, the pair of sense coils being at least one of the pair of central sense coils and the pair of edge sense coils.

According to the invention, both areas delimited by the pair of sense coils being congruent with each other when shifted along the linear axis. Such a configuration allows analyzing signals that are similar in amplitude.

Even more advantageously, the shape of the area of each pair of sense coils resembles a periodic function, i.e. has a pattern that repeats itself, in a direction perpendicular to the linear axis. Such configurations can allow easy processing of the data.

Even more advantageously, the both areas delimited by the pair of sense coils are shifted by half the period of the periodic function along the linear axis. Such a configuration enables increasing the measuring accuracy by using an arc tan algorithm.

Additionally or alternatively, the central position sensing member and the edge position sensing member covers in the direction along the linear axis the same measurement range. Such a configuration enables a compact arrangement. Additionally or alternatively, the central position sensing member and the edge position sensing member cover in a direction perpendicular to the linear axis the same measurement range. Such a configuration enables a compact arrangement and the direction perpendicular to the linear axis. Alternatively, the edge sense coil and the central sense coil may be arranged side by side in a direction perpendicular to the linear axis. Alternatively, the edge sense coil and the central sense coil may be arranged with a shift in linear axis.

Additionally or alternatively, the number of turns of each of the central sense coils is three. Such a configuration enables an absolute determination of the linear displacement of the boundary of the conductive element only using the central sense coil.

Advantageously, the number of turns of each of the edge sense coils is nine. Such a configuration optimizes the relative position information provided by the edge sense coil.

Alternatively, the number of turns of the edge sense coil and the number of turns of the central sense coils are co-prime. This is an alternative arrangement for an absolute determination of the linear displacement of the boundary of the conductive element using both, the pair of central and the pair edge sense coils. Such a configuration allows to increase the resolution by using the principles of a Vernier scale, which is also known as a Nonius, by using interpolation. Notably, in such a configuration the number of turns of the edge sense coils may be even, e.g. the number may be larger than four.

The sender member surrounds the central sense coils and the edge sense coils. Such a configuration allows for a compact design.

In an easy-to-manufacture embodiment, the sender member and/or at least one sense coil member can comprise a conductive path on a PCB.

The magnetic field can be an alternating magnetic field. This can for example be achieved by applying an alternating current at the sender member.

To keep the sensor device compact, the sender member and/or at least one sensor coil can lie substantially in a plane. Preferably, the members lie in the same plane. Such a plane has to be understood as a substantially flat object where one dimension is much smaller than the other two dimensions. Parts of the sensor device can for example, be located on a front side of a PCB and other parts can be located on a backside of the PCB. In such an embodiment, the sensor device would still lie substantially in a plane, e.g. the sensing plane.

In an easy-to-manufacture embodiment, the central sense coils are formed in a first layer, e.g. a first PCB, and the edge sense coils are formed in a second layer, i.e a second PCB. Such a multilayer arrangement can be stacked.

Advantageously, the sensor device further comprises a microcontroller. The microcontroller comprises on output for powering the sender member and the microcontroller comprises four inputs, each input being directly or indirectly via a preamplifier connected with one of the sense coils. As used herein, a direct connection is a connection transmitting the output signal of the sense coils without evaluating or manipulating the comprised information, i.e. the high frequency signal induced from the sender member in the sense coils. Such a configuration reduces the parts number, in particular an application-specific integrated circuit (ASIC) for generating one signal out of the pair of signals of a pair of sense coils. In particular, recent developments in microcontroller technology enable detecting the MHz oscillating fields induced in the sense coils and directly evaluate them without further using analog technology such as an ASIC to determine the linear displacement.

As used herein, a microcontroller is a small computer on a single metal-oxide-semiconductor integrated circuit (IC) chip. I.e. a microcontroller is a general purpose device. On the other hand, an ASIC is an integrated circuit (IC) chip customized for a particular use, rather than intended for general-purpose use.

According to a further embodiment, the sensor assembly comprises a non-magnetic and non-conductive sleeve for receiving a conductive element.

According to a further embodiment, a sensor device as described above is used to determine the linear displacement of a shock absorber.

Such a sensor can be arranged in a small sensor housing beside the shock absorber housing, such a sensor is robust to lateral displacement and tilt due to air gap between sensor cover and shock absorber. Further, this solution is particularly simple and cheap and an evaluation with a standard microcontroller only is possible, in particular no ASIC is needed. Therefore, without additional analogue components, one PCB including signal evaluation can be used and no separate coil with wire connections is needed.

Further, the present invention relates to a method to determine an absolute position of a boundary of the conductive element according to claim 9.

According to a further embodiment not being part of the invention, an eddy current sensor device for measuring a linear displacement of a boundary of a conductive element in a sensing plane, the sensor device comprising: a sender member for emitting a magnetic field; a central position sensing member for outputting a central position signal dependent on the linear displacement of the boundary of the conductive element, the central position sensing member comprising a pair of central sense coils each being formed by a plurality of turns, wherein the turns of each central sense coil being arranged side by side along a linear axis in the sensing plane thereby covering a measurement range and wherein turns forming a first central sense coil of the pair of central sense coils have a first diameter along the linear axis and turns forming a second central sense coil of the pair of central sense coils have a second diameter along the linear axis, wherein the first diameter is different to the second diameter. Such a configuration allows to improve the accuracy within the first central coil. In particular, such a configuration allows to increase the resolution by using the principles of a Vernier scale, which is also known as a Nonius, by using interpolation. In particular, the pair of edge sense coils is not necessary in this embodiment. Further advantages discussed above central positioning or the edge position member may be used to further improve this further embodiment.

The invention will now be described in greater detail, and in an exemplary manner using advantageous embodiments and with reference to the drawings. The described embodiments are only possible configurations in which, however, the individual features as described above can be provided independently of one another or can be omitted.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. The described embodiments are merely possible configurations and it must be borne in mind that the individual features as described above can be provided independently of one another or can be omitted altogether while implementing this invention, which is defined by the appended claims.

Further features and advantages will become apparent from the following more particular description of the various embodiments of the invention, as illustrated in the accompanying drawings, in which like references refer to like elements, and wherein:
In the figures,
- **FIG. 1**: is a schematic arrangement of the sense coils;
- **FIG. 2**: is a graph showing simulated data of a central sense coils;
- **FIG. 3**: is graphs showing simulated data of a central position member;
- **FIG. 4**: is a graph showing simulated data of a central position member and an edge position member;
- **FIG. 5**: is a sensor for a shock absorber;
- **FIG. 6**: is a schematic arrangement of an Eddy sensor;
- **FIG. 7**: is a detail of Fig. 6;
- **FIG. 8**: is a further detail of Fig. 6;
- **FIG. 9**: is a schematic of the Eddy sensor of Fig. 6 in combination with a conductive element;
- **FIG. 10**: is a schematic arrangement of an Eddy current sensor, when measuring the boundary position of a conductive element;
- **FIG. 11**: is a graph showing simulated signals of the Eddy current sensor as shown in the configuration of Fig. 10; and
- **FIG. 12**: is a graph showing simulated position data derived from the signal data as shown in Fig. 11.

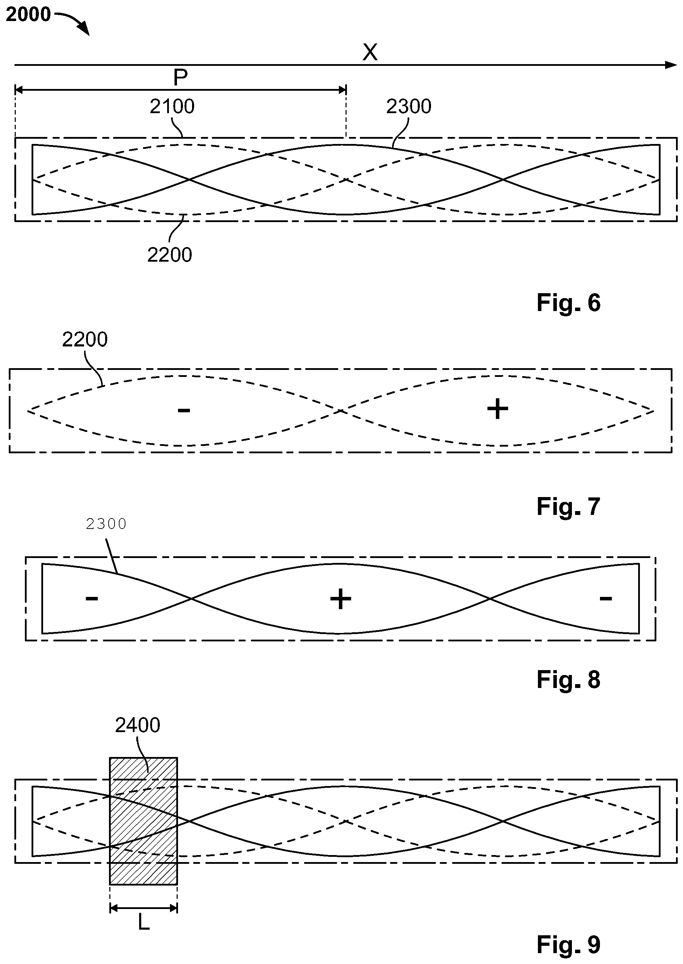

The present invention will now be explained in more detail with reference to the Figures. Firstly, with reference to Figs. 6 to 12 the technological basics of an Eddy current sensor will be explained.

In more detail, Fig. 6 is a schematic arrangement of an Eddy current sensor. In particular, the Eddy current sensor 2000 comprises a sender member 2100, a first sense coil 2200, and a second sense coil 2300, which can be all planar electric coils.

The sender member 2100 surrounds the first and second sense coil.

The first sense coil 2200, which is shown in detail in Fig. 7, consists of two turns arranged side by side. This shape may be referred to as an eye shaped sense coil. As shown in Fig. 7, the turns arranged side by side and can be wound in opposite direction, i.e. one is wound clockwise and one is wound counter clockwise, which is indicated by the signs plus + and minus -. Such a configuration enables that the net voltage induced by the sensing member is zero. In particular, this is caused because the areas shaped by each turn is equal and the sender member is arranged symmetrical with regard to the shaped areas.

The second sense coil 2300, which is shown in Fig. 8, can consist of three turns arranged side by side. This shape may be referred to as a candy-shaped coil. As shown in Fig. 8, the turns arranged side by side are wound in opposite direction, i.e. the edge turns are wound clockwise, and the central turn is wound counter clockwise, which is indicated by the signs + and -. Such a configuration enables that the net voltage induced by the sensing member is zero. In particular, this is caused because the sum of areas having the same sign, i.e. the both edge areas having the minus sign, is equal to the sum of areas having the opposing sign, i.e. the central area having the plus sign, and the sender member is arranged symmetrical with regard to the shaped areas.

As shown in Fig. 6, the area shaped by each sense coil can follow a periodic function with period P. The areas of the first and second sense coil can be congruent when shifted by half the period P. Further, the areas formed by each sense coil can be congruent when shifted by the period P. Thus, the Eddy current sensor 2000 covers a measurement range of two periods P. Such a configuration allows an absolute position measurement along a linear axis X of a conductive element.

Further, Fig. 9 is a schematic arrangement of the Eddy current sensor of Fig. 6 with a conductive element 2400. The dimension L of the conductive element along the linear axis X, is indicated in Fig. 9. This length L is small compared to the measurement range of two periods P of the Eddy current sensor. Such a configuration allows measuring the positon of the center of gravity of the conductive element 2400.

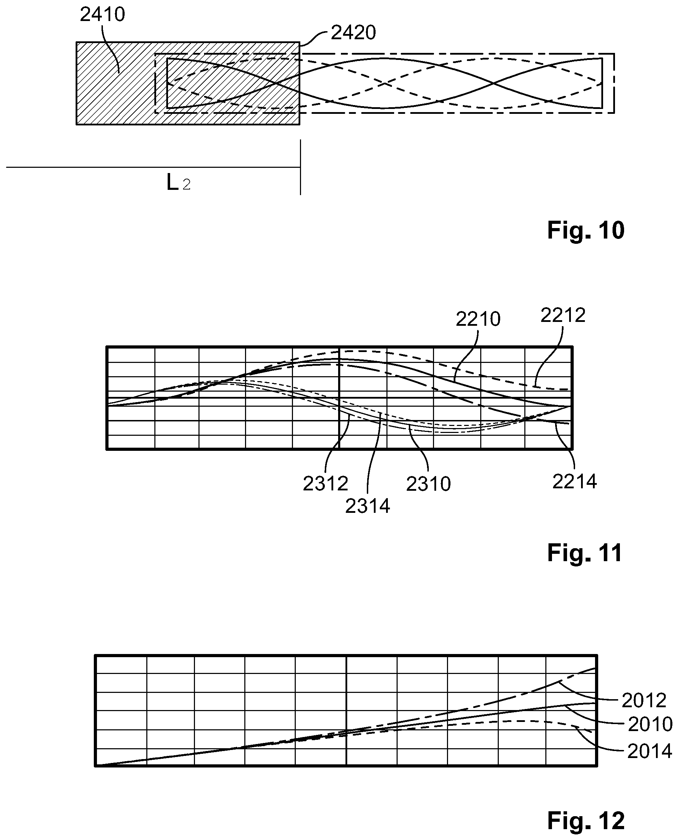

Fig. 10 shows the case when the length L2 of a conductive element 2410 is large compared to the measurement range of two periods P of the Eddy current sensor. The dimension L2 of the conductive element 2410 along the linear axis X is indicated in Fig. 10. In particular, the conductive element has a boundary 2420. An opposing boundary is not indicated, as the conductive element is not limited at the opposing side. In such a configuration, only the boundary 2420 of the conductive element 2410 can be measured.

Simulated measurement results of the configuration of Fig. 10 are shown in Fig. 11. In particular, the simulated voltages of the eye-shaped senor coil 2210 and simulated voltages of the candy-shaped senor coil 2310 are shown for a boundary position of the conductive element for the complete measurement range of 2P.

Further, in Fig. 11, are over-plotted errors caused by a tilt error. As used herein, a tilt error is caused by the distance between the boundary of the conductive element and the sensing plane, i.e. it increases or decreases along the linear axis. In particular, simulated signal values 2212 and 2214 show the influence to the signal provided by the eye-shaped sense coil. Further, simulated values 2312 and 2314 show the influence to the signal provided by the candy-shaped sense coil.

Fig. 12 shows the simulated absolute position value of the boundary of the conductive element over the measurement range. Ideally, the simulated value show that the determined value, e.g. determined by an arctan processing, is a linear function 2010 uniquely assigning a position of the boundary to one determined measurement signal.

Interestingly, as shown by the simulated errors caused by a constant tilt, the use of an Eddy current sensor for determining the absolute position is very limited when assuming that a boundary of a conductive element is measured, i.e., the configuration shown in Fig. 10. In more detail, as shown by the simulated error values 2012 and 2014, a tilt error accumulates over the measurement range resulting in a not unique identification of the position at one end of the measurement range. In particular, error value 2014 shows that two simulated signals correspond to one position of the boundary of the conductive element. Consequently, known Eddy current sensors cannot be used to determine the absolute position of a boundary of a conductive element when a tilt of the conductive element in relation to the coil plane is possible.

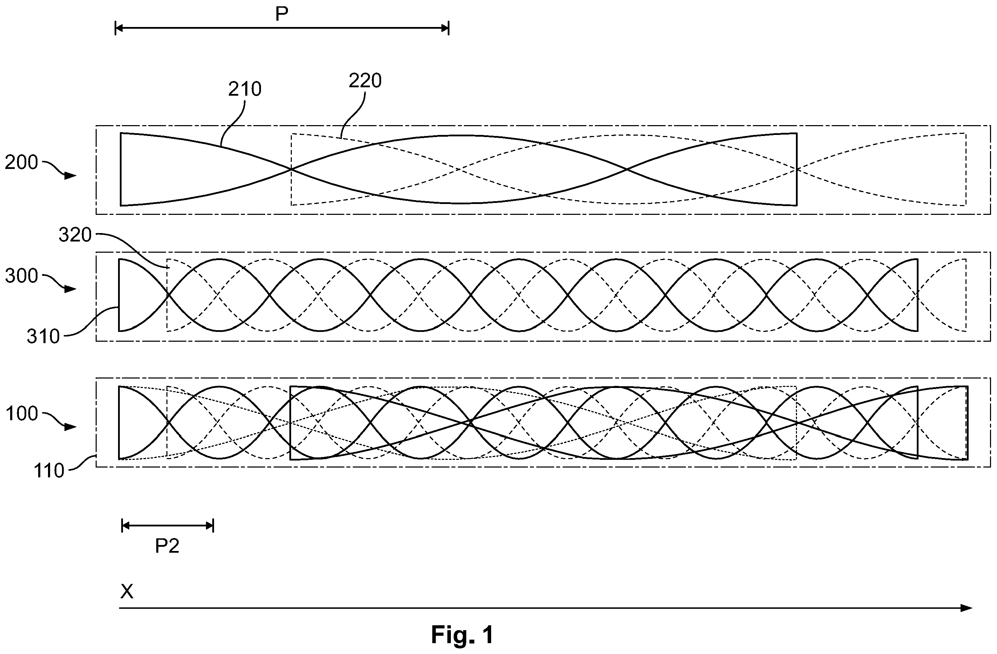

Fig. 1 shows an Eddy current sensor 100 that is adapted to measure the boundary of a conductive element. In more detail, the Eddy current sensor 100 comprises a sender member 110, a central position sensing member 200, and an edge position member 300. For the description of the sender member 110 is referred to the above description with reference to Figs. 6 to 12.

For reasons of presentation only, the central position sensing member 200 and the edge position member 300 are shown individually in the two top plot panels of Fig 1. The combination of the two top plot panels results in the Eddy current sensor 100 shown in the bottom plot panel.

In more detail, the central position member 200 comprises pair of coils 210, 220. Each coil 210 220 is candy-shaped and for the description of the shape is referred to Fig. 8.

The area shaped by each sense coil 210, 220 can follow a periodic function with period P. The area shaped by the sense coil 210 is congruent with the area shaped by the sense coil 220 when shifted by half the period P. Further, the areas of each of the sense coil 210, 220 are congruent when shifted by the period P. Further, the central position member 200 covers a measurement range of two periods P.

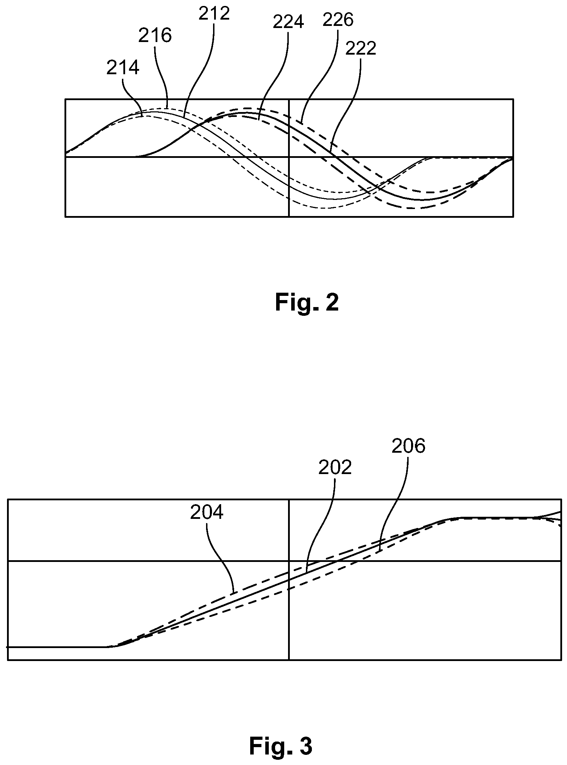

Simulated measurement results of the configuration of central positon sensing member 200 of Fig. 1 are shown in Fig. 2. In particular, Fig. 2 shows the simulated voltages of the candy-shaped senor coils 212 and 222 are shown for a boundary position of the conductive element for the complete measurement range of 2P.

Over plotted in Fig. 2 are errors values caused by a tilt error, i.e. the distance between the boundary of the conductive element and the sensing plane increases or decreases. In particular, simulated values 214 and 216 show the influence to the signal provided by the candy-shaped sense coil 210. Further, simulated values 224 and 226 show the influence to the signal provided by the candy-shaped sense coil 220.

Further, Fig. 3 shows the simulated absolute position value of the boundary of the conductive element over the measurement range. Ideally, the simulated value show that the determined value, e.g. determined by an arctan processing, is a linear function 202 uniquely assigning a position of the boundary to one determined measurement signal in a measurement range of three half periods P.

Interestingly, as shown by the simulated errors due to a tilt, an Eddy current sensor having two candy-shaped sense coils can be used for determining the absolute position when assuming that a boundary of a conductive element is measured. In more detail, as shown by the simulated error values 204 and 206, a tilt error does not accumulate over the measurement range. Rather, it compensates at the limits of the measurement range thereby enabling a unique identification of the position at the ends of the measurement range. Consequently, such an Eddy Current sensors with a pair of sense coils each having an odd number of turns can be used to determine the absolute position of a boundary of a conductive element.

In more detail, the odd number of turns enables that the areas having the same sign, is for example, shown in Fig. 8, to have the same centroid. Consequently, the tilt errors, which accumulate when the boundary of the conductive element is displaced along the linear axis, do not disturb the measurement result. Rather, these errors are cancelled out by using an Eddy current sensor having a pair of sense coils, each sense coil having an odd number of turns. This, however, is not possible in the case of a sense coil having an Eye shape, as shown in Fig. 7.

Back to Fig. 1, the edge position member 300 is described. The edge position member 300 can comprise a pair of coils 310, 320. Each coil 310, 320 is candy-shaped and for the description of the shape is referred to Fig. 8.

The area shaped by each sense coil follows a periodic function with period P2. The area shaped by the sense coil 310 is congruent with the area shaped by the sense coil 320 when shifted by half the period P2. Further, the areas of each of the sense coil 310 and 320 are congruent when shifted by the period P2. Further, the central position member 200 covers a measurement range of eight periods P2.

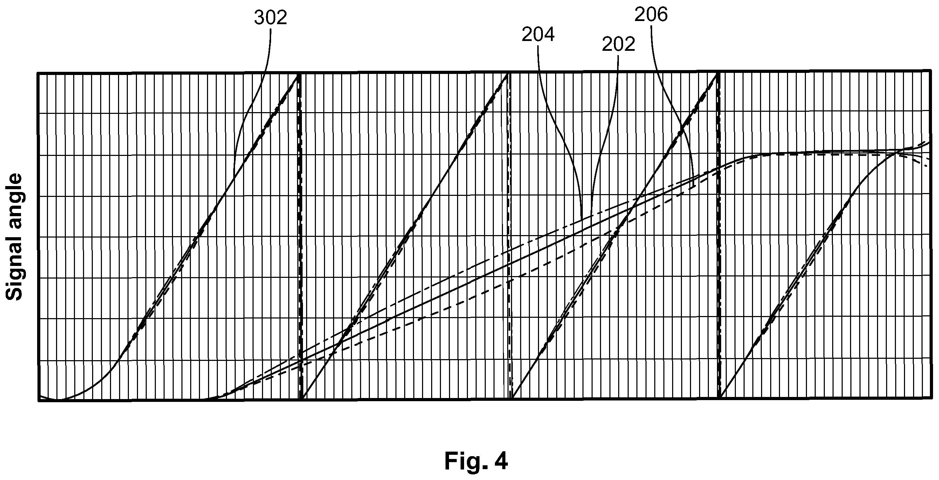

Further, Fig. 4 shows the results of Fig. 3. Additionally, Fig. 4 is over plotted the contribution of the edge sense member 300. In more detail, the simulated value of the central sense coil 200 shows that the determined value is a linear function 202, uniquely assigning a position of the boundary of the conductive element to one value in a measurement range covering three half periods P. The simulated value of the edge sense coil 300 show that the determined value is a saw tooth function 302 assigning a position of the boundary of the conductive element to a plurality of values in a measurement range covering the full two periods P.

In other words, the edge sense coil 300 provides a relative resolution that extends the measurement nearly to the complete measurement range.

As shown in the embodiment disclosed with reference to Figs. 1 to 4, each central sense coil 210 and 220 can have three turns. Such a configuration allows an absolute measurement of the position. Alternatively, the number of turns of each edge sense coil and the number of each central sense coil may be selected that the numbers are coprime. Consequently, by the ratio an absolute position determination is possible, i.e. using the principle of a Vernier Scale.

Further, according to an aspect in case that each central sense coil 210 and 220 has three turns, each edge sense coil 310, 320 can have nine turns. Such an arrangement is a compromise between extending the measurement range of absolutely determining a boundary of the conductive element and increasing the relative resolution information provided by the edge sense coil.

Further, a diameter of end turns of the edge sense coils can be smaller than a diameter of end turns of the central sense coils along the linear axis. As used herein, a diameter of a turn is a straight-line segment that passes through the center of the turn and whose endpoints lie on the turn. In other words, the end turns of the edge sense coils 310, 320 can be shorter in length along the linear axis than dimensions of end turns of the central sense coils 210, 220. Thus, the length of the period P2 is smaller than the length of the period P. Such a configuration allows that the measurement range of absolutely determining a boundary of the conductive element can be extended with an edge sense coils 310, 320.

Further, as shown in Fig. 1 the central sense coil 200 and the edge sense coil 100 can be arranged so as to overlap in the sensing plane (bottom plot in Fig. 1). Such a configuration allows a compact sensor arrangement.

Further, as shown in Fig. 1 the sender member 110 can surround the central sense coil 200 and the edge sense coil 100. Such a configuration allows a compact sensor arrangement.

Further, as shown in Fig. 1 the sender member 110, the central sense coil 200 and the edge sense coil 100 can be arranged symmetrically in the sensing plane, i.e. having at least on mirror symmetric axis, preferably two mirror symmetric axes. Such a configuration allows a particular easy processing of data.

Even not shown in Fig. 1, the sensor 100 can comprise a controller, which can be embodied as a microcontroller. The controller is used for controlling the power provided sender element. Further, the controller can directly receive the varying voltages induced in the sensing coils. The data of the controller can then be processed in a further, non-depicted module. The controller is arranged for example on a carrier with at least one of the central sense member, the edge sense member, and/or the sender member.

### REFERENCE NUMERALS

| **Reference Numeral** | **Description** |
|---|---|
| 100 | Eddy current sensor |
| 110 | sender member |
| 200 | central position sensing member |
| 202, 204, 206 | Simulated measurement results of sensor 200 |
| 210, 220 | Pair of coils |
| 212, 214, 216 | Simulated measurement results of sense coil 210 |
| 222, 224, 226 | Simulated measurement results of sense coil 220 |
| 300 | edge position member |
| 302 | Simulated measurement results of sensor 300 |
| 310 | Pair of coils |
| 1000 | Sensor device |
| 1010 | coils |
| 1020 | inner plastic tube |
| 1030 | electronics |
| 1100 | Dust tube |
| 1200 | Shock absorber |
| 1210 | piston rod top plate |
| 1220 | Boundary |
| 2000 | Eddy current sensor |
| 2010, 2012, 2014 | Simulated measurement results of the sensor 2000 |
| 2100 | sender member |
| 2200 | first sense coil |
| 2210, 2212, 2214 | Simulated signals of the first sense coil 2200 |
| 2300 | second sense coil |
| 2310, 2312, 2314 | Simulated signals of the second sense coil 2300 |
| 2400 | conductive element |
| 2420 | Boundary |
| X | Linear axis |
| P, P2 | Period |
| L, L2 | Length |

## Claims

1. Eddy current sensor device for measuring a linear displacement of a boundary of a conductive element in a sensing plane, the sensor device (100) comprising:
a sender member (110) for emitting a magnetic field, the sender member surrounds a pair of central sense coils (210, 220) and a pair of edge sense coils (310, 320);
a central position sensing member (200) for outputting a central position signal dependent on the linear displacement of the boundary of the conductive element, the central position sensing member comprising the pair of central sense coils (210, 220) each being formed by a plurality of turns, wherein the turns of each central sense coil being arranged side by side along a linear axis (X) in the sensing plane thereby covering a measurement range and wherein each central sense coil of the pair of central sense coils (210, 220) shapes an central sense coil area, the both central sense coil areas only partly overlapping in the sensing plane along the linear axis (X) and being congruent with each other;
an edge position sensing member (300) for outputting an edge position signal dependent on the linear displacement of the boundary of the conductive element, the edge position sensing member comprising the pair of edge sense coils (310, 320) each being formed by a plurality of turns, the turns of each edge sense coil being arranged side by side along the linear axis (X) in the sensing plane and a diameter of end turns of the edge sense coils along the linear axis is smaller than a diameter of end turns of the central sense coils along the linear axis for increasing the measuring accuracy of the measurement range and wherein each edge sense coil of the pair of edge sense coils (310, 320) shapes an edge sense coil area, the both edge sense coil areas only partly overlapping in the sensing plane along the linear axis (X) and being congruent with each other; and
wherein the number of turns of each of a central sense coils and the edge sense coils is odd, wherein abutting turns of each of the central sense coils and the edge sense coils are wound in opposite directions thereby surrounding areas in clockwise or counterclockwise direction,
wherein the central position sensing member and the edge position sensing member are overlapping in at least one of the direction along the linear axis and the direction perpendicular to the linear axis the sensing plane.

2. Sensor device according to claim 1, wherein the number of turns of at least one of the edge sense coils is greater than the number of turns of at least one of the central sense coils.

3. Sensor device according to any preceding claim, wherein the number of turns of each of the central sense coils is three, preferably wherein the number of turns of each of the edge sense coils is nine.

4. Sensor device according to claim 1, wherein the number of turns of the edge sense coil and the number of turns of the central sense coils are co-prime.

5. Sensor device according to any of the preceding claims, wherein the sender member and/or at least one of the central sense coils and the edge sense coils lie in a plane, and/or at least one of the central sense coils and the edge sense coils comprises a conductive path on a PCB.

6. Sensor device according to any of the preceding claims, further comprising a microcontroller, the microcontroller comprising on output for powering the sender member and the microcontroller comprising four inputs, each input being directly or indirectly via a intermediate preamplifier connected with one of the sense coils.

7. A sensor assembly comprising a non-magnetic and non-conductive sleeve for receiving a conductive element, wherein the sleeve comprises the sensor device according to one of the preceding claims.

8. Use of the sensor device according to any of claims 1 to 6 or the sensor assembly of claim 7 to determine the linear displacement of a shock absorber or a spring housing.

9. Method for determine an absolute position of a boundary of the conducive element, wherein the method comprises the steps of
supplying power to a sender member for emitting a magnetic field, the sender member surrounds a pair of central sense coils (210, 220) and a pair of edge sense coils (310, 320);
receiving from a central position sensing member a central position signal dependent on the linear displacement of the boundary of the conductive element, the central position sensing member comprising the pair of central sense coils each being formed by a plurality of turns, wherein the turns of each central sense coil being arranged side by side along a linear axis (X) in the sensing plane thereby covering a measurement range and wherein each central sense coil of the pair of central sense coils (210, 220) shapes an central sense coil area, the both central sense coil areas only partly overlapping in the sensing plane along the linear axis (X) and being congruent with each other;
receiving from an edge position sensing member an edge position signal dependent on the linear displacement of the boundary of the conductive element, the edge position sensing member comprising the pair of edge sense coils each being formed by a plurality of turns, the turns of each edge sense coil being arranged side by side along the linear axis in the sensing plane and a diameter of end turns of the edge sense coils along the linear axis is smaller than a diameter of end turns of the central sense coils along the linear axis for increasing the measuring accuracy of the measurement range and wherein each edge sense coil of the pair of edge sense coils (310, 320) shapes an edge sense coil area, the both edge sense coil areas only partly overlapping in the sensing plane along the linear axis (X) and being congruent with each other; and
wherein the number of turns of each of a central sense coils and the edge sense coils is odd, wherein abutting turns of each of the central sense coils and the edge sense coils are wound in opposite directions thereby surrounding areas in clockwise or counterclockwise direction, wherein the central position sensing member and the edge position sensing member are overlapping in at least one of the direction along the linear axis and the direction perpendicular to the linear axis the sensing plane.

## Patentansprüche

1. Wirbelstrom-Sensorvorrichtung zum Messen einer linearen Verschiebung einer Grenze eines leitfähigen Elements in einer Erfassungsebene, wobei die Sensorvorrichtung (100) aufweist:
ein Senderelement (110) zum Emittieren eines Magnetfelds, wobei das Senderelement ein Paar von zentralen Erfassungsspulen (210, 220) und ein Paar von Kantenerfassungsspulen (310, 320) umgibt;
ein Mittelpositionserfassungselement (200) zum Ausgeben eines Mittelpositionssignals in Abhängigkeit von der linearen Verschiebung der Grenze des leitfähigen Elements, wobei das Mittelpositionserfassungselement das Paar von zentralen Erfassungsspulen (210, 220) aufweist die jeweils durch eine Vielzahl von Windungen gebildet sind, wobei die Windungen jeder zentralen Sensorspule nebeneinander entlang einer linearen Achse (X) in der Sensorebene angeordnet sind und dadurch einen Messbereich abdecken, und wobei jede zentrale Erfassungsspule des Paares von zentralen Erfassungsspulen (210, 220) einen zentralen Sensorspulenbereich bildet, wobei sich die beiden zentralen Sensorspulenbereiche in der Sensorebene entlang der linearen Achse (X) nur teilweise überlappen und miteinander kongruent sind;
ein Kantenpositionserfassungselement (300) zum Ausgeben eines Kantenpositionssignals in Abhängigkeit von der linearen Verschiebung der Grenze des leitfähigen Elements, wobei das Kantenpositionserfassungselement das Paar von Kantenerfassungsspulen (310, 320) aufweist, die jeweils durch eine Vielzahl von Windungen gebildet sind, wobei die Windungen jeder Kantenerfassungsspule in der Erfassungsebene entlang der linearen Achse (X) nebeneinander angeordnet sind und ein Durchmesser der Endwindungen der Kantenerfassungsspulen entlang der linearen Achse kleiner ist als ein Durchmesser der Endwindungen der zentralen Erfassungsspulen entlang der linearen Achse, um die Messgenauigkeit des Messbereichs zu erhöhen, und wobei jede Kantenerfassungsspule des Paares von Kantenerfassungsspulen (310, 320) einen Kantenerfassungsspulenbereich bildet, wobei die beiden Kantenerfassungsspulenbereiche in der Erfassungsebene entlang der linearen Achse (X) nur teilweise überlappen und miteinander kongruent sind; und
wobei die Windungszahl jeder der zentralen Erfassungsspulen und der Kantenerfassungsspulen ungerade ist, wobei aneinanderstoßende Windungen jeder der zentralen Erfassungsspulen und der Kantenerfassungsspulen in entgegengesetzten Richtungen gewunden sind, wodurch Bereiche im Uhrzeigersinn oder gegen den Uhrzeigersinn umgeben werden,
wobei das Mittelpositionserfassungselement und das Kantenpositionserfassungselement sich in mindestens einer der Richtungen entlang der linearen Achse und der Richtung senkrecht zur linearen Achse der Erfassungsebene überlappen.

2. Sensorvorrichtung nach Anspruch 1, wobei die Anzahl der Windungen mindestens einer der Kantenerfassungsspulen größer ist als die Anzahl der Windungen mindestens einer der zentralen Erfassungsspulen.

3. Sensorvorrichtung nach einem der vorstehenden Ansprüche, wobei die Anzahl der Windungen jeder der zentralen Erfassungsspulen drei beträgt, wobei vorzugsweise die Anzahl der Windungen jeder der Kantenerfassungsspulen neun beträgt.

4. Sensorvorrichtung nach Anspruch 1, wobei die Windungszahl der Kantenerfassungsspule und die Windungszahl der zentralen Erfassungsspulen teilerfremd sind.

5. Sensorvorrichtung nach einem der vorstehenden Ansprüche, wobei das Sendeelement und/oder mindestens eine der zentralen Erfassungsspulen und der Kantenerfassungsspulen in einer Ebene liegen und/oder mindestens eine der zentralen Erfassungsspulen und der Kantenerfassungsspulen einen leitenden Pfad auf einer Leiterplatte aufweist.

6. Sensorvorrichtung nach einem der vorstehenden Ansprüche, die ferner einen Mikrocontroller aufweist, wobei der Mikrocontroller einen Ausgang zum Versorgen des Sendeelements aufweist und der Mikrocontroller vier Eingänge aufweist, wobei jeder Eingang direkt oder indirekt über einen zwischengeschalteten Vorverstärker mit einer der Sensorspulen verbunden ist.

7. Eine Sensorbaugruppe mit einer nichtmagnetischen und nichtleitenden Hülse zur Aufnahme eines leitfähigen Elements, wobei die Hülse die Sensorvorrichtung nach einem der vorstehenden Ansprüche aufweist.

8. Verwendung der Sensorvorrichtung nach einem der Ansprüche 1 bis 6 oder der Sensorbaugruppe nach Anspruch 7 zur Bestimmung der linearen Verschiebung eines Stoßdämpfers oder eines Federgehäuses.

9. Verfahren zur Bestimmung einer absoluten Position einer Grenze des leitfähigen Elements, wobei das Verfahren die folgenden Schritte aufweist
Versorgen eines Senderelements mit Energie zum Aussenden eines Magnetfelds, wobei das Senderelement ein Paar von zentralen Erfassungsspulen (210, 220) und ein Paar von Kantenspulen (310, 320) umgibt;
Empfangen eines Mittelpositionssignals von einem Mittelpositionserfassungselement, das von der linearen Verschiebung der Grenze des leitfähigen Elements abhängt, wobei das Mittelpositionserfassungselement das Paar von zentralen Erfassungsspulen aufweist, die jeweils durch eine Vielzahl von Windungen gebildet sind, wobei die Windungen jeder zentralen Erfassungsspule nebeneinander entlang einer linearen Achse (X) in der Erfassungsebene angeordnet sind, wodurch sie einen Messbereich abdecken, und wobei jede zentrale Erfassungsspule des Paares von zentralen Erfassungsspulen (210, 220) einen Mittelabtastspulenbereich bildet, wobei die beiden Mittelabtastspulenbereiche in der Abtastebene entlang der linearen Achse (X) nur teilweise überlappen und miteinander kongruent sind;
Empfangen eines Kantenpositionssignals, das von der linearen Verschiebung der Begrenzung des leitfähigen Elements abhängt, von einem Kantenpositionserfassungselement, wobei das Kantenpositionserfassungselement das Paar von Kantenerfassungsspulen aufweist, die jeweils durch eine Vielzahl von Windungen gebildet sind, wobei die Windungen jeder Kantenerfassungsspule nebeneinander entlang der linearen Achse in der Erfassungsebene angeordnet sind und ein Durchmesser der Endwindungen der Kantenerfassungsspulen entlang der linearen Achse kleiner ist als ein Durchmesser der Endwindungen der zentralen Erfassungsspulen entlang der linearen Achse, um die Messgenauigkeit des Messbereichs zu erhöhen, und wobei jede Kantenerfassungsspule des Paares von Kantenerfassungsspulen (310, 320) einen Kantenerfassungsspulenbereich bildet, wobei die beiden Kantenerfassungsspulenbereiche in der Erfassungsebene entlang der linearen Achse (X) nur teilweise überlappen und miteinander kongruent sind; und
wobei die Windungszahl jeder der zentralen Erfassungsspulen und der Kantenerfassungsspulen ungerade ist, wobei aneinanderstoßende Windungen jeder der zentralen Erfassungsspulen und der Kantenerfassungsspulen in entgegengesetzten Richtungen gewunden sind, wodurch Bereiche im Uhrzeigersinn oder gegen den Uhrzeigersinn umgeben werden, wobei das Mittelpositionserfassungselement und das Kantenpositionserfassungselement in mindestens einer der Richtungen entlang der linearen Achse und der Richtung senkrecht zur linearen Achse der Erfassungsebene überlappen.

## Revendications

1. Dispositif capteur à courants de Foucault pour mesurer un déplacement linéaire d'une limite d'un élément conducteur dans un plan de détection, le dispositif capteur (100) comprenant :
un organe émetteur (110) pour émettre un champ magnétique, l'organe émetteur entoure une paire de bobines de détection centrales (210, 220) et une paire de bobines de détection périphériques (310, 320) ;
un organe de détection de position centrale (200) pour délivrer en sortie un signal de position centrale dépendant du déplacement linéaire de la limite de l'élément conducteur, l'organe de détection de position centrale comprenant la paire de bobines de détection centrales (210, 220) chacune formée d'une pluralité de spires, dans lequel les spires de chaque bobine de détection centrale sont disposées côte à côte le long d'un axe linéaire (X) dans le plan de détection, couvrant ainsi une plage de mesure et dans lequel chaque bobine de détection centrale de la paire de bobines de détection centrales (210, 220) forme une aire de bobine de détection centrale, les deux aires de bobine de détection centrale ne se chevauchant que partiellement dans le plan de détection le long de l'axe linéaire (X) et étant congruentes l'une avec l'autre ;
un organe de détection de position périphérique (300) pour délivrer en sortie un signal de position périphérique dépendant du déplacement linéaire de la limite de l'élément conducteur, l'organe de détection de position périphérique comprenant la paire de bobines de détection périphériques (310, 320) chacune étant formée d'une pluralité de spires, les spires de chaque bobine de détection périphérique étant disposées côte à côte le long de l'axe linéaire (X) dans le plan de détection et un diamètre de spires d'extrémité des bobines de détection périphériques le long de l'axe linéaire est plus petit qu'un diamètre de spires d'extrémité des bobines de détection centrales le long de l'axe linéaire pour augmenter la précision de mesure de la plage de mesure et dans lequel chaque bobine de détection périphérique de la paire de bobines de détection périphériques (310, 320) forme une aire de bobine de détection périphérique, les deux aires de bobine de détection périphérique ne se chevauchant que partiellement dans le plan de détection le long de l'axe linéaire (X) et étant congruentes l'une avec l'autre ; et
dans lequel le nombre de spires de chacune des bobines de détection centrales et des bobines de détection périphériques est impair, dans lequel des spires contiguës de chacune des bobines de détection centrales et des bobines de détection périphériques sont enroulées dans des directions opposées, entourant ainsi des aires dans le sens des aiguilles d'une montre ou dans le sens inverse des aiguilles d'une montre,
dans lequel l'organe de détection de position centrale et l'organe de détection de position périphérique se chevauchent dans au moins l'une de la direction le long de l'axe linéaire et de la direction perpendiculaire à l'axe linéaire du plan de détection.

2. Dispositif capteur selon la revendication 1, dans lequel le nombre de spires d'au moins une des bobines de détection périphériques est supérieur au nombre de spires d'au moins une des bobines de détection centrales.

3. Dispositif capteur selon une quelconque revendication précédente, dans lequel le nombre de spires de chacune des bobines de détection centrales est de trois, de préférence dans lequel le nombre de spires de chacune des bobines de détection périphériques est de neuf.

4. Dispositif capteur selon la revendication 1, dans lequel le nombre de spires de la bobine de détection périphérique et le nombre de spires de la bobine de détection centrale sont copremiers.

5. Dispositif capteur selon l'une quelconque des revendications précédentes, dans lequel l'organe émetteur et/ou au moins l'une des bobines de détection centrales et des bobines de détection périphériques se trouvent dans un plan, et/ou au moins l'une des bobines de détection centrales et des bobines de détection périphériques comprend un chemin conducteur sur une carte PCB.

6. Dispositif capteur selon l'une quelconque des revendications précédentes, comprenant en outre un microcontrôleur, le microcontrôleur comprenant une sortie pour alimenter en énergie l'organe émetteur et le microcontrôleur comprenant quatre entrées, chaque entrée étant reliée directement ou indirectement, via un préamplificateur intermédiaire, à l'une des bobines de détection.

7. Ensemble capteur comprenant un manchon non magnétique et non conducteur pour recevoir un élément conducteur, dans lequel le manchon comprend le dispositif capteur selon l'une des revendications précédentes.

8. Utilisation du dispositif capteur selon l'une quelconque des revendications 1 à 6 ou de l'ensemble capteur selon la revendication 7 pour déterminer le déplacement linéaire d'un amortisseur ou d'un boîtier de ressort.

9. Procédé de détermination d'une position absolue d'une limite de l'élément conducteur, dans lequel le procédé comprend les étapes consistant à
fournir de l'énergie à un organe émetteur pour émettre un champ magnétique, l'organe émetteur entoure une paire de bobines de détection centrales (210, 220) et une paire de bobines de détection périphériques (310, 320) ;
recevoir d'un organe de détection de position centrale un signal de position centrale dépendant du déplacement linéaire de la limite de l'élément conducteur, l'organe de détection de position centrale comprenant la paire de bobines de détection centrales chacune formée d'une pluralité de spires, dans lequel les spires de chaque bobine de détection centrale sont disposées côte à côte le long d'un axe linéaire (X) dans le plan de détection, couvrant ainsi une plage de mesure et dans lequel chaque bobine de détection centrale de la paire de bobines de détection centrales (210, 220) forme une aire de bobine de détection centrale, les deux aires de bobine de détection centrale ne se chevauchant que partiellement dans le plan de détection le long de l'axe linéaire (X) et étant congruentes l'une avec l'autre ;
recevoir d'un organe de détection de position périphérique un signal de position périphérique dépendant du déplacement linéaire de la limite de l'élément conducteur, l'organe de détection de position périphérique comprenant la paire de bobines de détection périphériques chacune étant formée d'une pluralité de spires, les spires de chaque bobine de détection périphérique étant disposées côte à côte le long de l'axe linéaire dans le plan de détection et un diamètre de spires d'extrémité des bobines de détection périphériques le long de l'axe linéaire est plus petit qu'un diamètre de spires d'extrémité des bobines de détection centrales le long de l'axe linéaire pour augmenter la précision de mesure de la plage de mesure et dans lequel chaque bobine de détection périphérique de la paire de bobines de détection périphériques (310, 320) forme une aire de bobine de détection périphérique, les deux aires de bobine de détection périphérique ne se chevauchant que partiellement dans le plan de détection le long de l'axe linéaire (X) et étant congruentes l'une avec l'autre ; et
dans lequel le nombre de spires de chacune des bobines de détection centrales et des bobines de détection périphériques est impair, dans lequel des spires contiguës de chacune des bobines de détection centrales et des bobines de détection périphériques sont enroulées dans des directions opposées, entourant ainsi des aires dans le sens des aiguilles d'une montre ou dans le sens inverse des aiguilles d'une montre, dans lequel l'organe de détection de position centrale et l'organe de détection de position périphérique se chevauchent dans au moins l'une de la direction le long de l'axe linéaire et de la direction perpendiculaire à l'axe linéaire du plan de détection.
